# FASCICULE DE BREVET EUROPEEN

(11) **EP 4 373 722 B1**
(45) Date de publication et mention de la délivrance du brevet: **28.05.2025**
(21) Numéro de dépôt: 22740946.3
(22) Date de dépôt: 17.06.2022
(51) Int. Cl.: B60W 30/16, B60W 30/18, B60W 60/00

(54) **PROCÉDÉ ET DISPOSITIF DE CONTRÔLE D'UN SYSTÈME DE RÉGULATION ADAPTATIVE DE VITESSE D'UN VÉHICULE**
VERFAHREN UND VORRICHTUNG ZUR ADAPTIVEN REGELUNG EINER FAHRZEUGGESCHWINDIGKEIT
METHOD AND DEVICE FOR CONTROLLING A SYSTEM FOR REGULATING THE SPEED OF A VEHICLE ADAPTIVELY

(30) Priorité: 20.07.2021 FR 2107811
(43) Date de publication de la demande: 29.05.2024
(73) Titulaire: Stellantis Auto SAS, 78300 Poissy (FR)
(72) Inventeur: HECKETSWEILER, Thierry, 90800 BAVILLIERS (FR); COHEN, Christel, 92160 ANTONY (FR); MANCEUR, Malik, 95870 BEZONS (FR); IDLIMAM, Younes, 78450 VILLEPREUX (FR)
(74) Mandataire: ESIP
(86) Numéro de dépôt international: PCT/FR2022/051184
(87) Numéro de publication internationale: WO 2023/002099

(56) Documents cités:
- WO-A1-2020/099558
- DE-A1- 102017 112 300
- US-A1- 2017 240 176

## Description

### Domaine technique

La présente invention revendique la priorité de la demande française 2107811 déposée le 20/07/2021. La présente invention concerne les systèmes de régulation adaptative de vitesse. La présente invention concerne également un procédé et un dispositif de contrôle d'un système de régulation de vitesse d'un véhicule, notamment un véhicule autonome.

### Arrière-plan technologique

La sécurité routière fait partie des enjeux importants de nos sociétés. Avec l'augmentation du nombre de véhicules circulant sur les réseaux routiers du monde entier, et ce quelle que soient les conditions de circulation, les risques d'accidents et d'incidents provoqués par les conditions de circulation n'ont jamais été aussi importants.

Pour améliorer la sécurité routière, certains véhicules contemporains sont équipés de fonctions ou systèmes d'aide à la conduite, dits ADAS (de l'anglais « Advanced Driver-Assistance System » ou en français « Système d'aide à la conduite avancé »). Des systèmes ADAS mettent par exemple en œuvre des procédés basés sur la détection d'obstacles environnants à l'aide de capteurs périphériques embarqués sur un véhicule tels que des caméras, radars, ou encore lidars (de l'anglais « Light Detection And Ranging », ou « Détection et estimation de la distance par la lumière » en français).

Parmi ces systèmes, le système de régulation adaptative de vitesse, dit ACC (de l'anglais « Adaptive Cruise Control ») a pour fonction première la régulation automatique, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule. Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC.

Lorsqu'un véhicule équipé d'un système ACC enclenche un indicateur de changement de direction, notamment dans le but de changer de voie, le système ACC va anticiper son accélération, en particulier de manière à dépasser un véhicule circulant devant. L'emploi d'un indicateur de changement de direction n'est cependant pas directement synonyme d'une intention de dépassement, et l'action du système ACC résulte alors en la présence d'accélérations intempestives, notamment suivies de décélérations pour maintenir une distance limite avec le véhicule circulant devant.

DE102017112300A1 divulgue une régulation adaptative de vitesse en fonction d'une information relative à un changement de voie du véhicule et d'une information relative à une activation d'un indicateur de changement de direction d'un deuxième véhicule circulant devant le véhicule, sur la même voie.

### Résumé de l'invention

Un objet de la présente invention est de résoudre au moins un des inconvénients de l'arrière-plan technologique.

Un objet de la présente invention est d'améliorer le confort et la sécurité des occupants d'un véhicule équipé d'un système ACC.

Un autre objet de la présente invention est d'améliorer la sécurité d'un véhicule en améliorant la connaissance de son environnement.

Ces buts sont atteints par l'invention telle qu'exposée dans les revendications indépendantes.

Selon un premier aspect, l'invention concerne un procédé de contrôle d'un système de régulation adaptative de vitesse d'un premier véhicule circulant sur une voie de circulation, le procédé étant mis en œuvre par au moins un processeur, le procédé comprenant les étapes suivantes :
- première réception de premières informations représentatives d'une activation d'indicateur de changement de direction d'un deuxième véhicule circulant devant le premier véhicule sur la voie de circulation depuis au moins un capteur intégré au premier véhicule ;
- deuxième réception de deuxièmes informations représentatives d'une activation d'indicateur de changement de direction du premier véhicule ; et
- contrôle du système de régulation adaptative de vitesse en fonction des premières et deuxièmes informations.

Selon une variante, le contrôle correspond à une inhibition d'une mise en œuvre d'une opération de dépassement du deuxième véhicule par le système de régulation adaptative de vitesse.

Selon l'invention, la première réception s'effectue à un premier instant et la deuxième réception s'effectue à un deuxième instant, le procédé comprenant en outre une étape de comparaison d'une période séparant le premier instant du deuxième instant avec une valeur seuil, le contrôle s'effectuant en fonction des premières et deuxièmes informations et d'un résultat de la comparaison.

Selon une variante supplémentaire, la valeur seuil correspond à une valeur de durée comprise entre 3 et 10 secondes.

Selon encore une variante, l'au moins un capteur correspond à une caméra embarquée dans le premier véhicule.

Selon une variante additionnelle, le premier véhicule correspond à un véhicule autonome circulant selon un niveau d'autonomie au moins égal à 2.

Selon une variante supplémentaire, le deuxième véhicule est ciblé par le système de régulation adaptative de vitesse.

Selon un deuxième aspect, la présente invention concerne un dispositif de contrôle d'un système de régulation adaptative de vitesse, le dispositif comprenant une mémoire associée à au moins un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 3 annexées, sur lesquelles :
[Fig. 1] illustre schématiquement un véhicule circulant dans un environnement routier, selon un exemple de réalisation particulier et non limitatif de la présente invention ;
[Fig. 2] illustre schématiquement un dispositif configuré pour contrôler un système de régulation adaptative de vitesse du véhicule de la figure 1, selon un exemple de réalisation particulier et non limitatif de la présente invention ;
[Fig. 3] illustre un organigramme des différentes étapes d'un procédé de contrôle d'un système de régulation adaptative de vitesse du véhicule de la figure 1, selon un exemple de réalisation particulier et non limitatif de la présente invention.

### Description des exemples de réalisation

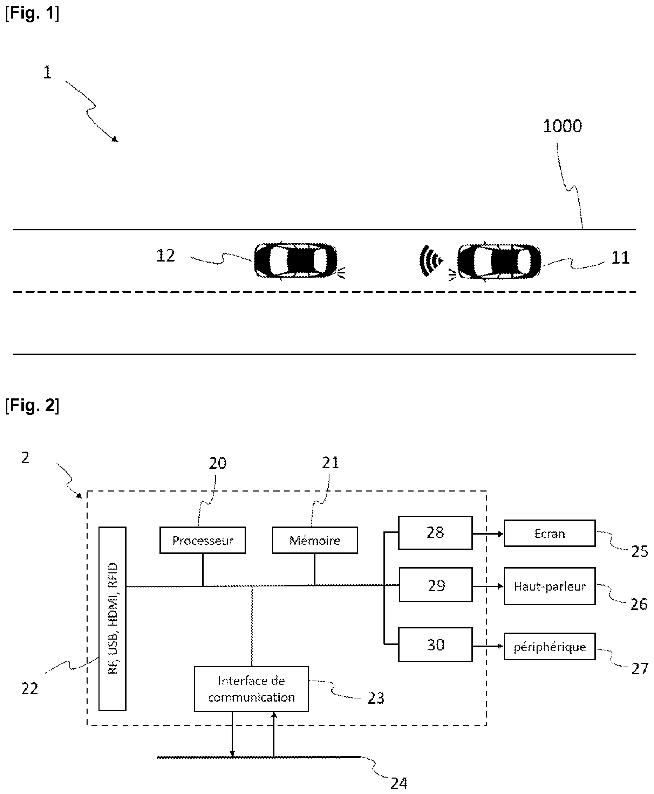

Un procédé et un dispositif de contrôle d'un système de régulation adaptative de vitesse d'un véhicule vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de la présente invention, un procédé de contrôle d'un système de régulation adaptative de vitesse, ou système ACC, d'un premier véhicule circulant sur une voie de circulation comprend une première réception, par un processeur embarqué du premier véhicule, de premières informations représentatives d'une activation d'indicateur de changement de direction d'un deuxième véhicule circulant devant le premier véhicule sur la voie de circulation. Les premières informations comprennent par exemple une valeur booléenne représentative de l'activation ou de la désactivation d'un indicateur de changement de direction et/ou des informations représentatives d'une position du deuxième véhicule vis-à-vis du premier véhicule. L'indicateur de changement de direction correspond par exemple à un feu clignotant du deuxième véhicule, en particulier un feu clignotant gauche dans un environnement routier présentant un sens de circulation à droite ou vice-versa.

Le processeur reçoit également des deuxièmes informations représentatives d'une activation d'indicateur de changement de direction du premier véhicule, par exemple à partir d'une interface homme-machine embarquée dans le premier véhicule ou en provenance d'un calculateur du premier véhicule, par exemple un calculateur central ou périphérique en communication dans un réseau multiplexé du premier véhicule.

En fonction des premières informations et des deuxièmes informations, le processeur contrôle alors le système ACC du premier véhicule, par exemple de manière à conserver le premier véhicule circulant derrière le deuxième véhicule selon une distance inter-véhicules sécuritaire lorsque les premières informations et les deuxièmes informations indiquent que le premier véhicule et le deuxième véhicule ont activé le même indicateur de changement de direction, ou alors de manière à permettre au premier véhicule de dépasser le deuxième véhicule.

Un tel procédé permet ainsi d'assurer un comportement plus régulier du premier véhicule équipé d'un système ACC, en évitant les accélérations inappropriées lors de l'activation d'un indicateur de changement de direction. Le confort et la sécurité des occupants du premier véhicule, ainsi que des autres usagers de la route, s'en trouve augmenté.

[Fig. 1] illustre schématiquement un premier véhicule 11 et un deuxième véhicule 12 circulant dans un environnement routier 1, selon un exemple de réalisation particulier et non limitatif de la présente invention.

La figure 1 illustre un premier véhicule 11, par exemple un véhicule automobile, circulant sur une voie de circulation 1000. Selon d'autres exemples, le premier véhicule 11 correspond à un car, un bus, un camion, un véhicule utilitaire ou une motocyclette, c'est-à-dire un véhicule de type véhicule terrestre motorisé.

En accord avec le concept sous-jacent de l'invention, le premier véhicule 10 embarque un système de régulation adaptative de vitesse, dit système ACC. Le système ACC fait par exemple partie d'un ensemble de systèmes d'aide à la conduite, dit ADAS, permettant de conduire le premier véhicule 10 de manière autonome ou semi-autonome.

Le niveau d'autonomie d'un véhicule autonome est par exemple compris entre 0 et 5 (0 pour un véhicule n'ayant aucune autonomie et dont la conduite est sous la supervision totale du conducteur et 5 pour un véhicule totalement autonome).

Les 5 niveaux d'autonomie de la classification de l'agence fédérale chargée de la sécurité routière sont :
- niveau 0 : aucune automatisation, le conducteur du véhicule contrôle totalement les fonctions principales du véhicule (moteur, accélérateur, direction, freins) ;
- niveau 1 : assistance au conducteur, l'automatisation est active pour certaines fonctions du véhicule, le conducteur gardant un contrôle global sur la conduite du véhicule ; le régulateur de vitesse fait partie de ce niveau, comme d'autres aides telles que l'ABS (système antiblocage des roues) ou l'ESP (électro-stabilisateur programmé) ;
- niveau 2 : automatisation de fonctions combinées, le contrôle d'au moins deux fonctions principales est combiné dans l'automatisation pour remplacer le conducteur dans certaines situations ; par exemple, le régulateur de vitesse adaptatif combiné avec le centrage sur la voie permet à un véhicule d'être classé niveau 2, tout comme l'aide au stationnement (de l'anglais « Park assist ») automatique ;
- niveau 3 : conduite autonome limitée, le conducteur peut céder le contrôle complet du véhicule au système automatisé qui sera alors en charge des fonctions critiques de sécurité ; la conduite autonome ne peut cependant avoir lieu que dans certaines conditions environnementales et de trafic déterminées (uniquement sur autoroute par exemple) ;
- niveau 4 : conduite autonome complète sous conditions, le véhicule est conçu pour assurer seul l'ensemble des fonctions critiques de sécurité sur un trajet complet ; le conducteur fournit une destination ou des consignes de navigation mais n'est pas tenu de se rendre disponible pour reprendre le contrôle du véhicule ;
- niveau 5 : conduite complètement autonome sans l'aide de conducteur dans toutes les circonstances.

La classification de l'organisation internationale des constructeurs automobiles est semblable à celle listée ci-dessus, à la différence près qu'elle comporte 6 niveaux, le niveau 3 de la classification américaine étant divisé en 2 niveaux dans celle de l'organisation internationale des constructeurs automobiles.

Le premier véhicule 11 correspond ainsi par exemple à un véhicule autonome circulant selon un niveau d'autonomie au moins égal à 2, permettant d'assister le conducteur lorsque celui-ci cherche à effectuer une opération de dépassement.

Selon l'exemple de la figure 1, un deuxième véhicule 12 circule sur la voie de circulation 1000 devant le premier véhicule. Le deuxième véhicule 12 est par exemple ciblé par le système ACC du premier véhicule 11. Lorsque le système ACC est activé, le système ACC a pour objectif de réaliser une accélération de consigne, appelée A_{consigne}(t), qui varie au cours du temps 't' et qui permet de maintenir ou atteindre une vitesse de régulation et/ou de maintenir une distance de sécurité déterminée vis-à-vis du deuxième véhicule 12 en amont du premier véhicule 11, c'est à dire d'un deuxième véhicule 12 circulant devant le premier véhicule 11 dans le même sens de circulation sur la même voie de circulation 1000. Les données obtenues du ou des capteurs embarqués dans le premier véhicule 11 permettent au système ACC du premier véhicule 11 d'établir les valeurs des accélérations de consigne A_{consigne}(t) au cours du temps 't'. Le système ACC ou un calculateur de ce système transmet par exemple les consignes d'accélérations A_{consigne}(t) qu'il a déterminé au(x) calculateur(s) supervisant le fonctionnement d'un groupe motopropulseur du premier véhicule 11, notamment pour que ce(s) dernier(s) détermine(nt) les consignes de couple à générer par le groupe motopropulseur pour respecter les consignes d'accélération A_{consigne}(t) et réguler la vitesse du premier véhicule 11. Le premier véhicule 11 suit ainsi dans cet exemple le deuxième véhicule 12 à une distance déterminée et pouvant varier dans le temps (en fonction du comportement dynamique du premier véhicule 11 et du deuxième véhicule 12).

Dans une première opération, au moins un processeur du premier véhicule 11, par exemple un calculateur central, un ensemble de calculateurs, ou encore un calculateur périphérique associé au système ACC du premier véhicule 11, reçoit des premières informations représentatives d'une activation d'indicateur de changement de direction du deuxième véhicule 12 depuis au moins un capteur intégré au premier véhicule 11.

L'au moins un processeur comprend par exemple un boîtier de servitude intelligent ou BSI (en anglais « Built-In Systems Interface ») ou encore VSM (de l'anglais « Vehicle Supervisor Module » ou en français « Module de Supervision de Véhicule ») apte à former un réseau de communication, par exemple un réseau de communication multiplexé, dans lequel des données sont transmises via une liaison sans fil ou filaire, par exemple des données reçues de capteurs embarqués. L'au moins un processeur ou BSI (ci-après désigné « BSI ») est ainsi relié à une pluralité de calculateurs périphériques, par exemple aux calculateurs périphériques associés aux systèmes ADAS embarqués du premier véhicule 11 et/ou à d'autres calculateurs de systèmes embarqués du premier véhicule 11.

Le BSI reçoit ainsi les premières informations par communication dans le réseau de communication multiplexé, permettant par exemple de caractériser l'évolution de la voie de circulation 1000 au cours du trajet du premier véhicule 11. Les premières informations sont par exemple générées à partir d'une donnée représentative de l'environnement routier 1, par exemple une donnée obtenue par un ou plusieurs capteurs de système(s) de détection d'objet embarqués dans le premier véhicule 11, ce ou ces systèmes faisant par exemple partie d'un système ADAS du premier véhicule 11.

A titre d'exemple, le ou les capteurs associés à ces systèmes de détection d'objet correspondent à un ou plusieurs des capteurs suivants :
- un ou plusieurs radars à ondes millimétriques arrangés sur le premier véhicule 11, par exemple à l'avant, à l'arrière, sur chaque coin avant/arrière du premier véhicule 11 ; chaque radar étant adapté pour émettre des ondes électromagnétiques et pour recevoir les échos de ces ondes renvoyées par un ou plusieurs objets, dans le but de détecter des obstacles et leurs distances vis-à-vis du premier véhicule 11 ; et/ou
- un ou plusieurs LIDAR(s), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du premier véhicule 11 se trouvant dans le champ de vision de la ou les caméras.

Selon une variante particulière, l'ensemble de capteurs comprend une caméra multifonction positionnée en portion supérieure d'un pare-brise du premier véhicule 11, la caméra multifonction étant configurée pour analyser l'environnement routier 1, détecter les véhicules de l'environnement routier, en particulier le deuxième véhicule 12 et/ou tout véhicule ciblé par le système ACC du premier véhicule 11, et leur allumage de feux de signalisation, dont un indicateur de changement de direction de type feu clignotant.

Les données obtenues de ce ou ces capteurs varient selon le type de capteur. Lorsqu'il s'agit d'un radar ou d'un LIDAR, la donnée d'environnement routier 1 correspond par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le premier véhicule 11 embarquant le capteur. Lorsqu'il s'agit d'une caméra vidéo, la donnée d'environnement routier 1 correspond à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 12, et d'en déduire un ou plusieurs paramètres dynamiques de l'objet mobile tels que la vitesse et/ou l'accélération et/ou la présence et l'état de feux de signalisation.

Dans une deuxième opération, le BSI reçoit également des deuxièmes informations représentatives d'une activation d'indicateur de changement de direction du premier véhicule 11. Le BSI communique par exemple, à l'intérieur du réseau multiplexé, avec un système IHM (Interface Homme-Machine) embarqué ou encore un système IVI (de l'anglais « In-Vehicle Infotainment » ou en français « Infodivertissement embarqué »), le BSI communiquant par exemple à un superviseur du système IHM contrôlant une ou plusieurs interfaces du premier véhicule 11 parmi lesquelles une planche de bord, aussi appelée combiné, du premier véhicule 11. Le système IHM transmet dans cet exemple les deuxièmes informations au BSI à la suite d'une action du conducteur du premier véhicule 11 permettant l'activation de son indicateur de changement de direction.

Selon l'invention, le BSI reçoit les premières informations à un premier instant t1, les deuxièmes informations à un deuxième instant t2 et compare dans une troisième opération optionnelle la période Δt séparant le premier instant t1 du deuxième instant t2 à une valeur seuil. Cette conception permet ainsi de différencier des activations d'indicateur de changement de direction sensiblement simultanées et donc susceptibles de représenter une manœuvre similaire du premier véhicule 11 et du deuxième véhicule 12, d'activations plus espacées et susceptibles de représenter des comportements différents des deux véhicules 11, 12 ou encore une erreur dans l'activation d'indicateur de changement de direction du deuxième véhicule 12, par exemple une activation non suivie d'un changement de direction associé. La valeur seuil est par exemple définie et enregistrée dans une mémoire du BSI, et correspond par exemple à une valeur de durée comprise entre 3 et 10 secondes, de préférence 5 secondes, à une valeur ajustable manuellement selon les préférences du conducteur et/ou du constructeur du premier véhicule 11, ou encore à une valeur ajustée selon la vitesse du premier véhicule 11 de manière à tenir compte de comportements différents selon la portion de route et/ou les conditions de circulation.

Dans une quatrième opération, le BSI contrôle alors le système ACC en fonction des premières et deuxièmes informations, c'est-à-dire que le BSI tient compte de l'intention de changement de direction des deux véhicules 11, 12 pour déterminer la stratégie de contrôle du système ACC. Selon une conception, le contrôle correspond ainsi à une inhibition d'une mise en œuvre d'une opération de dépassement du deuxième véhicule 12, le système ACC étant configuré pour faciliter le dépassement en anticipant l'accélération du premier véhicule 11, cette fonction étant alors désactivée de manière préemptive en conservant par exemple une stratégie standard de maintien d'une distance inter-véhicules entre le premier véhicule 11 et le deuxième véhicule 12.

Selon l'invention, la quatrième opération s'effectue à la fois en fonction des premières informations, des deuxièmes informations et du résultat de la troisième opération, c'est-à-dire du dépassement ou non de la valeur seuil par la période Δt séparant le premier instant t1 du deuxième instant t2. Ainsi, lorsque l'activation de l'indicateur de changement de direction du deuxième véhicule 12 est détectée, mais que l'indicateur de changement de direction du premier véhicule 11 est activé dans un délai suffisamment important, le BSI ignore par exemple les premières informations et permet au système ACC de mettre en œuvre une opération de dépassement du deuxième véhicule 12.

Ainsi, le contrôle du système ACC du premier véhicule 11 en fonction des informations représentative d'activation d'indicateur de changement de direction du premier véhicule 11 et du deuxième véhicule 12 permet de confirmer si le premier véhicule 11 maintient son suivi du deuxième véhicule 12 ou s'il effectue un dépassement, la discrimination de ces cas de figures permettant d'éviter les accélérations inattendues du premier véhicule 11 tout en maintenant le même niveau d'assistance à la conduite.

[Fig. 2] illustre schématiquement un dispositif 2 configuré pour contrôler un système de régulation adaptative de vitesse d'un véhicule, selon un exemple de réalisation particulier et non limitatif de la présente invention. Le dispositif 2 correspond par exemple à un dispositif embarqué dans le premier véhicule 11, par exemple un calculateur du système ADAS. Le dispositif 2 est par exemple configuré pour recevoir des données de la part de capteurs embarqués du premier véhicule 11 et/ou d'autres calculateurs, et contrôler un système ACC du premier véhicule 11.

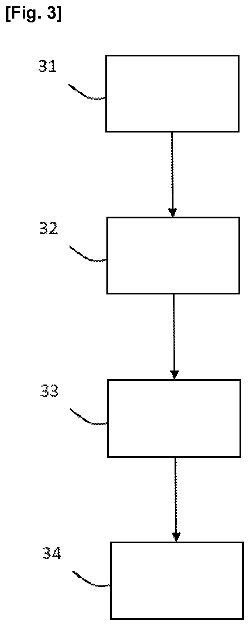

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 24. L'interface de communication 23 correspond par exemple à un transmetteur configuré pour transmettre et recevoir des informations et/ou des données via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage 25, tactile ou non, un ou des haut-parleurs 26 et/ou d'autres périphériques 27 (système de projection) via respectivement des interfaces de sortie 28, 29 et 30. Selon une variante, l'un ou l'autre des dispositifs externes est intégré au dispositif 2.

[Fig. 3] illustre un organigramme des différentes étapes d'un procédé de contrôle d'un système de régulation adaptative de vitesse d'un véhicule, par exemple le système ACC du premier véhicule 11, selon un exemple de réalisation particulier et non limitatif de la présente invention. Le procédé est par exemple mis en œuvre par un dispositif embarqué dans le premier véhicule 11 ou par le dispositif 2 de la figure 2.

Dans une première étape, 31, des premières informations représentatives d'une activation d'indicateur de changement de direction d'un deuxième véhicule sont reçues, depuis au moins un capteur intégré au premier véhicule.

Dans une deuxième étape 32, des deuxièmes informations représentatives d'une activation d'indicateur de changement de direction du premier véhicule sont reçues.

Dans une troisième étape 33, une période séparant l'instant de la première étape 31 de l'instant de la deuxième étape 32 est comparée avec une valeur seuil.

Dans une quatrième étape 34, le système de régulation adaptative de vitesse est contrôlé en fonction des premières informations, des deuxièmes informations et du résultat de la troisième étape 33.

Selon une variante, les variantes et exemples des opérations décrits en relation avec la figure 1 s'appliquent aux étapes du procédé de la figure 3.

Bien entendu, la présente invention ne se limite pas aux exemples de réalisation décrits ci-avant mais s'étend à un procédé de contrôle d'un système de régulation adaptative de vitesse dans une pluralité de situations et/ou qui inclurait des étapes supplémentaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 2 de la figure 2.

## Revendications

1. Procédé de contrôle d'un système de régulation adaptative de vitesse d'un premier véhicule (11) circulant sur une voie de circulation (1000), ledit procédé étant mis en œuvre par au moins un processeur, ledit procédé comprenant les étapes suivantes :
- première réception (31), à un premier instant, de premières informations représentatives d'une activation d'indicateur de changement de direction d'un deuxième véhicule (12) circulant devant ledit premier véhicule (11) sur ladite voie de circulation (1000) depuis au moins un capteur intégré audit premier véhicule (11) ;
- deuxième réception (32), à un deuxième instant, de deuxièmes informations représentatives d'une activation d'indicateur de changement de direction dudit premier véhicule (11) ;
- comparaison (33) d'une période séparant ledit premier instant dudit deuxième instant avec une valeur seuil ; et
- contrôle (34) dudit système de régulation adaptative de vitesse en fonction desdites premières et deuxièmes informations et en fonction d'un résultat de ladite comparaison (33).

2. Procédé selon la revendication 1, dans lequel ledit contrôle (34) correspond à une inhibition d'une mise en œuvre d'une opération de dépassement dudit deuxième véhicule (12) par ledit système de régulation adaptative de vitesse.

3. Procédé selon la revendication 1 ou 2, dans lequel ladite valeur seuil correspond à une valeur de durée comprise entre 3 et 10 secondes.

4. Procédé selon l'une des revendications 1 à 3, dans lequel ledit au moins un capteur correspond à une caméra embarquée dans ledit premier véhicule (11).

5. Procédé selon l'une des revendications 1 à 4, dans lequel ledit deuxième véhicule (12) est ciblé par ledit système de régulation adaptative de vitesse.

6. Programme d'ordinateur comportant des instructions pour la mise en œuvre du procédé selon l'une quelconque des revendications précédentes, lorsque ces instructions sont exécutées par un processeur.

7. Dispositif (2) de contrôle d'un système de régulation adaptative de vitesse, ledit dispositif (2) comprenant une mémoire (21) associée à au moins un processeur (20) configuré pour la mise en œuvre des étapes du procédé selon l'une quelconque des revendications 1 à 5.

8. Véhicule (11) comprenant le dispositif selon la revendication 7.

## Patentansprüche

1. Verfahren zur Steuerung eines adaptiven Geschwindigkeitsregelsystems eines auf einer Fahrspur (1000) fahrenden ersten Fahrzeugs (11), wobei das Verfahren durch mindestens einen Prozessor implementiert wird und das Verfahren die folgenden Schritte umfasst:
- Erstempfang (31) zu einem ersten Zeitpunkt einer ersten Information, die eine Aktivierung eines Richtungswechselanzeigers eines zweiten Fahrzeugs (12) darstellt, das vor dem ersten Fahrzeug (11) auf der Fahrspur (1000) fährt, von mindestens einem in das erste Fahrzeug (11) integrierten Sensor;
- zweiter Empfang (32) zu einem zweiten Zeitpunkt einer zweiten Information, die eine Aktivierung eines Richtungswechselanzeigers des ersten Fahrzeugs (11) darstellt;
- Vergleichen (33) einer Zeitspanne, die den ersten Zeitpunkt von dem zweiten Zeitpunkt trennt, mit einem Schwellenwert; Und
- Steuerung (34) des adaptiven Geschwindigkeitsregelungssystems als Funktion der ersten und zweiten Informationen und als Funktion eines Ergebnisses des Vergleichs (33).

2. Verfahren nach Anspruch 1, wobei die Steuerung (34) einer Verhinderung der Durchführung eines Überholvorgangs des zweiten Fahrzeugs (12) durch das adaptive Geschwindigkeitsregelsystem entspricht.

3. Verfahren nach Anspruch 1 oder 2, wobei der Schwellenwert einem Zeitdauerwert zwischen 3 und 10 Sekunden entspricht.

4. Verfahren nach einem der Ansprüche 1 bis 3, bei dem der mindestens eine Sensor einer Kamera an Bord des ersten Fahrzeugs (11) entspricht.

5. Verfahren nach einem der Ansprüche 1 bis 4, wobei das zweite Fahrzeug (12) durch das adaptive Geschwindigkeitsregelungssystem angesteuert wird.

6. Computerprogramm, das Anweisungen zum Implementieren des Verfahrens nach einem der vorhergehenden Ansprüche umfasst, wenn diese Anweisungen von einem Prozessor ausgeführt werden.

7. Vorrichtung (2) zum Steuern eines adaptiven Geschwindigkeitsregelungssystems, wobei die Vorrichtung (2) einen Speicher (21) umfasst, der mit mindestens einem Prozessor (20) verbunden ist, der zum Ausführen der Schritte des Verfahrens nach einem der Ansprüche 1 bis 5 konfiguriert ist.

8. Fahrzeug (11) umfassend die Vorrichtung nach Anspruch 7.

## Claims

1. Method for controlling an adaptive cruise control system of a first vehicle (11) traveling on a traffic lane (1000), said method being implemented by at least one processor, said method comprising the following steps:
- first reception (31), at a first instant, of first information representative of an activation of a turn indicator of a second vehicle (12) traveling in front of said first vehicle (11) on said traffic lane (1000) from at least one sensor integrated into said first vehicle (11);
- second reception (32), at a second instant, of second information representative of an activation of a turn indicator of said first vehicle (11);
- comparison (33) of a period separating said first instant from said second instant with a threshold value; and
- control (34) of said adaptive cruise control system as a function of said first and second information and as a function of a result of said comparison (33).

2. Method according to claim 1, wherein said control (34) corresponds to an inhibition of an implementation of an overtaking operation of said second vehicle (12) by said adaptive cruise control system.

3. Method according to claim 1 or 2, wherein said threshold value corresponds to a duration value of between 3 and 10 seconds.

4. Method according to one of claims 1 to 3, wherein said at least one sensor corresponds to a camera on board said first vehicle (11).

5. Method according to one of claims 1 to 4, wherein said second vehicle (12) is targeted by said adaptive cruise control system.

6. Computer program comprising instructions for implementing the method according to any one of the preceding claims, when these instructions are executed by a processor.

7. Device (2) for controlling an adaptive speed regulation system, said device (2) comprising a memory (21) associated with at least one processor (20) configured for implementing the steps of the method according to any one of claims 1 to 5.

8. Vehicle (11) comprising the device according to claim 7.
